(19) Europäisches Patentamt

European Patent Office

Office européen des brevets

(11) **EP 1 031 587 A2**

(12) **EUROPÄISCHE PATENTANMELDUNG**

(43) Veröffentlichungstag:
**30.08.2000 Patentblatt 2000/35**

(51) Int. Cl.[7]: **C08G 8/28**, C08L 61/06,
C09D 11/10

(21) Anmeldenummer: **00103020.4**

(22) Anmeldetag: **15.02.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **22.02.1999 DE 19907582**

(71) Anmelder:
**Vianova Resins GmbH & Co. KG
55252 Mainz-Kastel (DE)**

(72) Erfinder:
- **Walz, Gerd, Dr.
  65207 Wiesbaden (DE)**
- **Bender, Albert, Dr.
  55130 Mainz (DE)**
- **Bothe, Lothar, Dr.
  55124 Mainz (DE)**
- **Giencke, Astrid, Dr.
  65719 Hofheim (DE)**
- **Emsen, Antoni
  65193 Wiesbaden (DE)**

(54) **Bindemittel für Druckfarben**

(57)     Bindemittel für Druckfarben, erhältlich durch Umsetzung von

Verbindungen **A** enthaltend Einheiten von Naturharzen und/oder Naturharzsäuren und/oder Kohlenwasserstoffharzen mit $C_5$-, $C_9$- oder Terpen-Einheiten mit

Verbindungen **B** enthaltend Einheiten von Phenol-Aldehyd-Kondensationsprodukten

in einem Lösungsmittel **C** bei einer Temperatur von 50 bis 300 °C, wobei keine vernetzten Produkte gebildet werden, und wobei der Massenanteil der Verbindungen **A** 1 bis 98 %, der der Verbindungen **B** 0,1 bis 50 %, und der der Lösungsmittel **C** in der Reaktionsmischung 1 bis 98 % beträgt, und die Summe der Massenanteile stets 100 % beträgt.

**EP 1 031 587 A2**

## Beschreibung

Die Erfindung betrifft neue Bindemittel für Druckfarben, herstellbar durch Umsetzung von modifizierten Kolophonium- und/oder Kohlenwasserstoffharzen mit Phenol-Aldehyd-Kondensationsprodukten in einem Lösungsmittel.

Es ist bereits bekannt, Bindemittelharze für Tiefdruck- oder Offsetdruckfarben auf Basis von Naturharzen und Naturharzsäuren herzustellen. Dabei werden diese zumeist mit geeigneten Modifizierungsmitteln wie beispielsweise $\alpha,\beta$-ungesättigten Dicarbonsäuren und deren Anhydriden, Aldehyden, Phenolen oder Aldehyd-Phenol-Kondensationsprodukten, wie Resolen oder Novolaken, Metallverbindungen, Veresterungsmitteln, Alkoholen, Fettsäuren und Fettsäureestern sowie Kohlenwasserstoffharzen in einer Polykondensationsreaktion zu modifizierten Naturharzen umgesetzt. Über Art und Menge des Modifizierungsmittels können die gewünschten Eigenschaften eingestellt werden.

Es ist jedoch auch möglich, bestimmte bei der Raffination anfallende Kohlenwasserstoff-Fraktionen, die hauptsächlich sogenannte $C_5$-Monomere oder von diesen abgeleitete Di- und Oligomere, wie Cyclopentadien und Dicyclopentadien oder Isopren, und/oder hauptsächlich sogenannte $C_9$-Monomere, wie Inden, Styrol und Cumaron, oder Terpene, wie $\alpha$- oder $\beta$-Pinen, Dipenten und Limonen, enthalten, zu Kohlenwasserstoffharzen zu polymerisieren, und die erhaltenen Polymere mit den vorstehend beschriebenen Modifizierungsmitteln weiter zu modifizierten Kohlenwasserstoffharzen umzusetzen. Die Kohlenwasserstoffharze können auch mit Naturharzen und/oder Naturharzsäuren vermischt werden, wobei diese Mischungen dann dem Modifizierungsschritt unterworfen werden.

Diese Polykondensationen müssen in der Schmelze bei hohen Temperaturen durchgeführt werden. Typisch ist ein Bereich von 220 bis 280 °C.

Die so erhaltenen Bindemittelharze werden dann je nach Anwendungszweck in einem geeigneten Vehikel wie Toluol für den Illustrationstiefdruck oder Mineralöl und/oder Leinöl für den Offsetdruck gelöst, wobei das entsprechende Bindemittel, auch Firnis genannt, erhalten wird. In diesem Bindemittel, das auch weitere Zuschlagstoffe enthalten kann, wie sie üblicherweise zur Bindemittelherstellung verwendet werden, wie beispielsweise Wachse, Trocknungshilfsmittel oder Alkydharze, wird dann ein Pigment dispergiert. Dabei entsteht die Druckfarbe. Es ist jedoch auch möglich, dieses Bindemittel als Auflackfirnis zu verwenden, und das Pigment in bereits dispergierter Form zuzugeben.

An leistungsfähige Bindemittel und die damit formulierten Druckfarben wird die Forderung gestellt, daß sie den Drucken die bei den hohen Druck-Geschwindigkeiten erforderliche rasche Trocknung, einen guten Stand auf der Oberfläche des Bedruckstoffs, eine gute Scheuerfestigkeit sowie einen hohen Glanz verleihen müssen. Dies gilt insbesondere für nicht oder nur schwach gestrichene und daher stark saugende Naturpapiere. Besonders schwierig ist es, solche Forderungen mit Bindemitteln zu erfüllen, die mit niedrigviskosen und daher niedermolekularen Bindemittelharzen formuliert sind. Diese penetrieren im allgemeinen zu stark ins Papier, was zum Glanzverlust führt. Um diesen Nachteil zu vermeiden, werden deshalb in zunehmendem Maß zur Formulierung von Bindemitteln und den daraus hergestellten Druckfarben hochmolekulare Bindemittelharze verwendet. Sie verhindern das Penetrieren von Pigment in den Bedruckstoff, sorgen deshalb für einen guten Stand der Druckfarbe auf der Oberfläche des Bedruckstoffes und damit für eine gute Glanzentwicklung des Drucks.

Bekanntlich ist jedoch die Herstellung von hochmolekularen Bindemittelharzen durch Polykondensations- oder Polymerisationsreaktionen in der Schmelze technisch schwierig durchzuführen, da mit dem Anstieg des Polymerisationsgrades auch ein Anstieg der Schmelzeviskosität einhergeht, deren Beherrschung leistungsfähiger Rühraggregate sowie einer exakten Temperaturführung bedarf. Aus den hochviskosen Harzschmelzen kann die Wärme wegen der durch die hohe Viskosität verminderten Durchmischung und Diffusion nur schlecht abgeführt werden. Wegen ihrer hohen Viskosität wird die Austragszeit der Harzschmelzen aus den Reaktionskesseln auf Kühlbänder verlängert; daher ist eine möglichst hohe Temperatur der Schmelze erwünscht, um die Viskosität abzusenken und den Austrag zu beschleunigen. Während dieser zusätzlichen Aufenthaltszeit während des Austrags aus dem Reaktionskessel bei hohen Temperaturen neigen die Harze zur Weiterreaktion, wobei die Schmelzeviskosität weiter ansteigt. Das zuerst ausgetragene Harz wird sich daher von dem zuletzt ausgetragenen deutlich unterscheiden. Die Weiterreaktion während des Austrage-Vorganges führt daher zu Inhomogenität bezüglich des Polymerisationsgrades und damit auch der Viskosität des Harzes. Diese Inhomogenität kann zwar durch Mischen des ausgetragenen Harzes vermindert werden, es bleibt jedoch eine breite Verteilung von unterschiedlichen Polymerisations- oder besser Polykondensationsgraden (die weiter unten definierte Uneinheitlichkeit *U* beträgt über 50, meist über 100). Die Weiterreaktion des im Kessel verbliebenen Harzes während des Austragsvorganges kann auch mit einem unkontrollierten Molekülaufbau einhergehen, der schließlich zum Vernetzen des Ansatzes und damit zu einem unlöslichen und für die Anwendung als Bindemittelharz in Bindemitteln für Druckfarben unbrauchbaren Produkt führen kann. Immer leistungsfähigere und aufwendigere Kühlbänder sind erforderlich, um die Inhomogenitäten in der Viskosität und in der Verteilung der Polykondensationsgrade zwischen Anfang und Ende des Austragevorgangs der Harzschmelze auf ein Kühlband in Grenzen zu halten.

Es war auch schon versucht worden, selbstgelierende hochviskose Harze herzustellen. In der US-A 5,763,565 wird ein Verfahren beschrieben, bei dem hochviskose gelierte Harz-Zusammensetzungen insbesondere in einem in-situ-Verfahren hergestellt werden durch Reaktion von Harzen, die auf Kolophonium oder auf Kohlenwasserstoff-Harzen basieren, mit Vernetzungsmitteln in einem organischen Lösungsmittel. Dabei wird ein kovalent vernetztes Harz erzeugt, das in Lösungsmitteln nicht löslich ist, sondern in bekannter Weise zu einem Gel angequollen wird. Diese Harz-Gele sind auf Grund ihrer rheologischen Eigenschaften besonders bei schnellaufenden Druckmaschinen vorteilhaft. Durch die Vernetzung ist die Viskosität gegenüber der nicht vernetzten Form erhöht; die Gelstruktur bricht bei der mechanischen und thermischen Beanspruchung nicht zusammen, da kovalente Bindungen vorliegen. Nachteilig bei diesen Systemen ist jedoch, daß bei der notwendigen Überschreitung des Gelpunktes (Beginn der dreidimensionalen Vernetzung des Polymeren) während der Reaktion mit den Vernetzern die Filtrierbarkeit der Produkte problematisch wird. Beim Vernetzungsvorgang steigt die Viskosität der Produkte exponentiell an und ist daher nur sehr schwer kontrollierbar. Ferner besitzen solche angequollenen Gele eine verminderte Lagerbeständigkeit im Vergleich zu echten Lösungen. Die mangelnde Stabilität zeigt sich in einer Veränderung der (scheinbaren) Viskosität sowie in der allmählichen Phasentrennung.

Zur Herstellung von hochviskosen gelierten Bindemitteln für Offsetdruckfarben wurde auch bereits vorgeschlagen, ein übliches Harz auf Basis von Kolophonium oder ein Kohlenwasserstoffharz mit einem metallfreien Vernetzer umzusetzen, wobei kovalent vernetzte Harz-Zusammensetzungen mit wesentlich erhöhter Viskosität resultieren. Es wurde weiter vorgeschlagen, diese Umsetzung in einem Extruder durchzuführen, aus dem das Bindemittelharz relativ schnell ausgetragen werden kann (WO-A 96-35759). Dieses Verfahren hat jedoch den Nachteil, daß bereits zur Herstellung relativ kleiner Mengen ein hoher apparativer Aufwand getrieben werden muß, der wegen der niedrigen Raum-Zeit-Ausbeute diese Bindemittelharze und daraus nach den üblichen Methoden formulierte Bindemittel unwirtschaftlich macht. Ansonsten führen die so hergestellten vernetzten Harze in gleicher Weise zu den oben beschriebenen Problemen. Die erhaltenen vernetzten Harze sind ebenfalls nicht löslich, sondern werden in geeigneten Lösungsmitteln lediglich angequollen.

Bei den kurzen Verweilzeiten von wenigen Minuten in einem Extruder kann auch das Polykondensationsgleichgewicht nicht sicher erreicht werden; die Verteilung der Polykondensationsgrade im Produkt des Reaktionsextruders ist daher kinetisch kontrolliert und nicht thermodynamisch kontrolliert. Bei einer thermodynamischen Kontrolle des Polykondensationsprozesses wird die sogenannte Normalverteilung (Schulz-Flory-Verteilung) erreicht, die besonders eng ist (Uneinheitlichkeit $U$ berechnet als Quotient des Gewichtsmittels $M_w$ und des Zahlenmittels $M_n$ der molaren Masse des Reaktionsproduktes ist theoretisch 2). Unter "einheitlichen" Harzen werden im Folgenden solche verstanden, bei denen die Verteilung der molaren Massen möglichst wenig unterschieden von dieser Normalverteilung ist, d. h. deren Uneinheitlichkeit 2 bis 25, bevorzugt von 3 bis 20, und im allgemeinen nicht größer als 12 ist.

Deshalb war die Aufgabe gestellt, ein Verfahren zu entwickeln, nach dem sich einheitliche hochmolekulare Bindemittelharze mit geringen vernetzten Anteilen und befriedigender Lagerstabilität sowie daraus formulierte Bindemittel für Druckfarben einfach und wirtschaftlich herstellen lassen.

Es wurde gefunden, daß man die Unzulänglichkeiten der bekannten Produkte bzw. der bekannten Verfahren in unerwarteter Weise dadurch überwinden kann, daß man zur Herstellung von nicht vernetzten Bindemitteln für Druckfarben Bindemittelharze auf Basis von modifizierten Naturharzen und/oder Naturharzsäuren und/oder Kohlenwasserstoffharzen mit Phenol-Aldehyd-Kondensationsprodukten umsetzt, wie Novolaken oder Resolen, die auch modifiziert sein können, wobei die Umsetzung in einem Lösungsmittel erfolgt. Bei dieser Verfahrensweise wird der Gelpunkt nicht überschritten; es bilden sich bei der Reaktion mit den modifizierten Novolaken oder Resolen hochmolekulare langkettenverzweigte, aber nicht vernetzte Harzlösungen, die sehr gut filtrierbar sind und ausgezeichnete Lagerstabilität über mehrere Monate aufweisen. Die gewünschten Endviskositäten der Harzlösungen sind leicht einstellbar und kontrollierbar und hängen nur in geringem Maße von der Reaktionsdauer ab.

Unter "modifizierten Novolaken oder Resolen" werden hier solche verstanden, die vorwiegend linear aufgebaut sind und in der Eduktmischung nur geringe Anteile (unter 10, bevorzugt unter 5, insbesondere unter 2 % der Summe der Massen der Ausgangsstoffe) an verzweigend wirkenden Substanzen wie z. B. Phenolabkömmlinge mit einer Funktionalität gegenüber Formaldehyd von mehr als zwei enthalten. Der Anteil an verzweigend wirkenden Ausgangsstoffen, der in der Komponente **B** toleriert werden kann, hängt auch von der Struktur des Harzes **A** ab und ist dadurch beschränkt, daß es in keinem Fall zu einer Überschreitung des Gelpunktes und damit zu einer Vernetzung während der Umsetzung der Komponenten **A** und **B** kommen darf.

Die so hergestellten Bindemittel und damit die ihnen zugrundeliegenden nichtvernetzten Bindemittelharze haben gegenüber den beim Stand der Technik beschriebenen Methoden den Vorteil, daß die Isolierung der hochmolekularen und hochviskosen Bindemittelharze nicht notwendig ist und die damit verbundenen Schwierigkeiten vermieden werden können, da sie in situ, d. h. während der Herstellung des Bindemittels aus einfachen und gut zu handhabenden Komponenten in den üblichen zur Bindemittelherstellung oder zur Firnisherstellung verwendeten Apparaturen erzeugt werden können.

Gegenstand der Erfindung sind daher nichtvernetzte Bindemittel für Druckfarben, erhältlich durch Umsetzung von

Verbindungen **A**   enthaltend Einheiten von Naturharzen und/oder Naturharzsäuren und/oder Kohlenwasserstoffharzen mit $C_5$-, $C_9$- oder Terpen-Einheiten mit

Verbindungen **B**   enthaltend Einheiten von Phenol-Aldehyd-Kondensationsprodukten

in einem Lösungsmittel **C** bei einer Temperatur von 50 bis 300 °C.

Die erfindungsgemäßen Bindemittel besitzen bevorzugt eine durch Gelpermeationschromatographie (geeicht mit Polystyrol-Standard) bestimmte Uneinheitlichkeit von 2 bis 25, insbesondere von 2 bis 20, und einen Wert für tan δ (Quotient von Imaginärteil (Verlustmodul) G'' und Realteil (Speichermodul) G' des komplexen Schermoduls, gemessen mit einem oszillierende Rotationsviskosimeter an Lösungen der Bindemittel-Harze mit einem Massenanteil des Harzes von ca. 40 %) von 1 bis 30, bevorzugt von 1,1 bis 20, insbesondere von 1,2 bis 5.

Nichtvernetzt im Sinne der vorliegenden Erfindung bedeutet, daß sich nach den üblichen Methoden der Polymerchemie keine vernetzten unlöslichen Bestandteile nachweisen lassen, mit Ausnahme der bei jedem technisch durchgeführten Prozeß unvermeidbaren minimalen Menge an Gelteilchen. Beispielsweise können vernetzte Anteile (Gelteilchen) in einer Lösung nachgewiesen werden, indem diese Lösung weiter verdünnt wird, mit einem thermodynamisch guten Lösungsmittel für das betreffende Polymer (zu einer Konzentration von beispielsweise 0,1 g des Polymeren in 100 ml Lösung). Beim Filtrieren einer solchen Lösung der erfindungsgemäßen Bindemittelharze durch ein übliches Membranfilter mit einer mittleren Porengröße von 0,5 μm darf sich ein unlöslicher Rückstand bilden, dessen Masse nach Entfernen des Lösungsmittels durch Trocknen maximal 1 % der Masse des in der filtrierten Lösung gelösten Harzes beträgt.

Als Verbindungen der Substanzgruppe **A** finden vorzugsweise solche Verwendung, die erhältlich sind durch Umsetzung von

**A1**   Harzen ausgewählt aus Kolophonium, Wurzelharz, Tallharz sowie disproportioniertem oder partiell hydriertem oder dimerisiertem Naturharz und Kohlenwasserstoffharzen mit $C_5$-, $C_9$- oder Terpen-Einheiten
mit mindestens einer Verbindung aus mindestens einer der Gruppen

**A2**   einkernige und mehrkernige Phenole, die gegenüber Oxoverbindungen mehrfachfunktionell sind,

**A3**   Aldehyde oder Aldehydacetale,
wobei die Verbindungen der Klassen **A2** und **A3** auch teilweise oder gänzlich ersetzt sein können durch Phenolharze (Phenol-Aldehyd-Kondensationsprodukte) **A23**, wie Resole oder Novolake, die nach den gängigen Methoden der Phenolharzchemie hergestellt werden können,

**A4**   Metallverbindungen ein-, zwei- und dreiwertiger Metalle,

**A5**   α,β-äthylenisch ungesättigte Carbonsäuren oder deren Anhydride,

**A6**   mindestens zwei Hydroxylgruppen enthaltende Veresterungsmittel, und

**A7**   Fettsäuren mit 10 bis 26 C-Atomen oder deren Dimere und Trimere.

Die modifizierten Naturharze und/oder Kohlenwasserstoffharze der Substanz-Klasse **A** können nach den bekannten Verfahren durch Polykondensations- bzw. Polymerisationsreaktion in der Schmelze bei Temperaturen von vorzugsweise 220 bis 280 °C von Verbindungen **A1** mit Verbindungen ausgewählt aus **A2** bis **A7** erhalten werden, wobei die Umsetzung sowohl in kontinuierlichen wie auch diskontinuierlichen Verfahren erfolgen kann. Besonders vorteilhaft lassen sich für die erfindungsgemäße Umsetzung auch mit Phenolharzen **A23** modifizierte Naturharze und/oder Kohlenwasserstoffharze verwenden.

Die Verbindungen der Substanzgruppe **A** können einzeln, zu mehreren nacheinander oder als Gemische in die erfindungsgemäße Umsetzung eingesetzt werden.

Soweit als Harze **A1** Naturharze eingesetzt werden, können diese beliebiger Provenienz sein, wobei sich die Mengenverhältnisse der Harzsäuren unterscheiden (Abietin-, Neoabietin-, Lävopimar-, Pimar-, Isopimar- und Palustrinsäure, neben hydrierter und dehydrierter Abietinsäure), beispielsweise russischer, chinesischer, portugiesischer, brasilianischer oder indonesischer Herkunft, oder deren Mischungen. Die Naturharze können auch in untergeordneter Menge (d. i. bis zu einem Massenanteil von ca. 20 %) Terpene enthalten.

Die Kohlenwasserstoffharze sind Polymere auf Basis von $C_5$-Einheiten wie Cyclopentadien, dessen Oligomeren, wie Di-, Tri- und Tetrameren (die durch Diels-Alder-Addition erhältlich sind) sowie deren Alkylderivaten oder Cooligomeren dieser Verbindungen, z.B. Methylcyclopentadien, Cyclopentadien-Isopren-Dimeren, Cyclopentadien-Piperylen-Dimeren, und/oder Polymere auf Basis von Kohlenwasserstoffen des sog. $C_9$-Schnittes wie Inden, Cumaron oder Styrol, und/oder Polymere auf Basis von Terpenen wie α- und β- Pinen und/oder fossile Terpenharze, wie die sogenannten Montanharze.

Vorteilhaft lassen sich als Harze **A1** auch Mischungen von Naturharz(säur)en und Kohlenwasserstoffharzen einsetzen.

Die Phenole **A2** sind insbesondere Phenol selbst, $(C_1-C_{12})$-Alkyl- und -Dialkyl-Phenole, Aryl- oder Aralkylphenole mit 6 bis 15 Kohlenstoffatomen in der Aryl- bzw. Aralkyl-Gruppe, insbesondere Kresole, Xylenole, Isopropyl-, p-tert.-Butyl-, Amyl-, Octyl-, Nonylphenol, Diphenylolpropan, Phenylphenol, Cumylphenol, deren Gemische, sowie Additionsprodukte aus Phenolen und äthylenisch ungesättigten Monomeren, vorzugsweise Styrol, α-Methylstyrol, α-Chlorstyrol, Vinyltoluol, Cyclopentadien sowie Gemische dieser genannten Phenole. Auch die unter **B1** genannten Phenole können als Komponente **A2** eingesetzt werden.

Als Komponente **A3** werden vorzugsweise verwendet lineare oder verzweigte aliphatische $(C_1-C_7)$-Aldehyde, insbesondere Formaldehyd in seinen verschiedenen monomeren, oligomeren und polymeren Formen, Acetaldehyd, Butyraldehyd, Isobutyraldehyd, ferner aromatische Aldehyde wie Benzaldehyd, heterocyclische Aldehyde wie Furfural (Furfurol), und Dialdehyde wie Glyoxal. Die ebenfalls erfindungsgemäß einsetzbaren Aldehyd-Acetale lassen sich durch Addition von aliphatischen, linearen, verzweigten oder cyclischen einwertigen oder mehrwertigen Alkoholen mit 1 bis 18 Kohlenstoffatomen an die genannten Aldehyde bevorzugt unter saurer Katalyse herstellen. Geeignet sind beispielsweise Diäthylacetal, Dimethylformal, Diäthylformal, Dimethylbutyral, Bis(äthylenglykolformal), Dicyclohexylformal und oxacyclische Formale oder Acetale wie 1,3-Dioxolan (Glykolformal), 1,3-Dioxan (1,3-Propandiolformal), 5,5 -Dimethyl-1,3-dioxan (Neopentylglykolformal) und 1,3-Dioxepan (Butandiolformal).

Die Metallverbindungen **A4** werden vorzugsweise ausgewählt aus Oxiden, Hydroxiden, Carbonaten, Hydrogencarbonaten, Acetaten, Stearaten und Benzoaten von Lithium, Natrium, Kalium, Magnesium, Calcium, Zink und Aluminium.

Als Verbindungen **A5** sind insbesondere ungesättigte aliphatische lineare, verzweigte oder cyclische Carbonsäuren mit 3 bis 15 Kohlenstoffatomen geeignet wie Fumarsäure, Maleinsäure, Maleinsäureanhydrid, Itaconsäure, Zimtsäure, Acrylsäure und Methacrylsäure, sowie (soweit existent) deren Anhydride.

Die Verbindungen **A6** sind insbesondere lineare, verzweigte oder cyclische aliphatische Verbindungen mit 2 bis 12 Kohlenstoffatomen und mindestens zwei Hydroxylgruppen. Vorzugsweise polyfunktionelle lineare oder verzweigte aliphatische Alkohole eingesetzt, insbesondere bifunktionelle, beispielsweise Glykol, 1,2- und 1,3-Propandiol, 1,4-Butandiol, Neopentylglykol und 1,6-Hexandiol, oder trifunktionelle, beispielsweise Trimethyloläthan, Trimethylolpropan, Glycerin, oder tetrafunktionelle, beispielsweise Erythrit, Threit, Ditrimethyloläthan, Ditrimethylolpropan und Pentaerythrit, pentafunktionelle Alkohole wie Arabit und Ribit, oder hexafunktionelle Alkohole, beispielsweise dimerisiertes Pentaerythrit, Mannit und Sorbit.

Geeignete Fettsäuren oder di- oder oligomerisierte Fettsäuren **A7** sind beispielsweise Palmitin- und Stearinsäure, ungesättigte Fettsäuren wie Linol- und Linolensäure, oder deren Gemische, wie z. B. Soja-, Leinöl-, Tallölfettsäure oder Fettsäureester, wie z. B. Soja-, Lein- oder Holzöl oder hydriertes Kokosfett.

Als Verbindungen der Substanzgruppe **B** finden vorzugsweise solche Verwendung, die durch Umsetzung von

**B1** phenolischen Komponenten, die mindestens ein gegenüber Aldehyden reaktives Wasserstoffatom am aromatischen Kern besitzen und dadurch in ihrer Reaktivität gegenüber Aldehyden mindestens monofunktionell sind, mit

**B2** Oxoverbindungen, ausgewählt aus Aldehyden, Ketonen und Verbindungen, die unter Bildung von Aldehyd- oder Ketongruppen reagieren, und die gegenüber Phenolen, welche am aromatischen Ring reaktive Wasserstoffatome besitzen, reaktiv sein können und mit diesen Kondensationsprodukte bilden können,

hergestellt werden.

Als Verbindungen **B1** werden vorzugsweise einkernige und mehrkernige phenolische Verbindungen eingesetzt, die in ihrer Reaktivität mit beispielsweise Formaldehyd monofunktionell, difunktionell, trifunktionell oder auch höherfunktionell sein können, wie das Phenol selbst, die verschiedenen Kresol- und Xylenol-Isomere, die Isomere des Äthylphenols, des Propyl- bzw. Isopropylphenols sowie ortho- und parasubstituierte Alkylphenole mit bis zu 18, insbesondere bis zu 15, C-Atomen in der Seitenkette, ungesättigte Phenole, wie z. B. o- oder p-Vinylphenol, p-Isopropenylphenol, sowie die durch Destillation aus Cashew-Öl erhältlichen C15 - ungesättigten Alkenylphenole, kondensierte Phenole, wie z.B. α- oder β-Naphthol, mehrkernige Phenole, wie z.B. die Isomere des Diphenylolmethans, Diphenyloläthans, Diphenylolpropans (Bisphenol A), Triphenylolmethans oder Triphenyloläthans, mehrwertige Phenole, wie z. B. Resorcin, Brenzkatechin, Hydrochinon und Pyrogallol, ferner Additionsprodukte von Dicyclo- und Cyclopentadien oder Styrol an Phenole. Auch die weiteren noch unter **A2** genannten Phenole können als Komponente **B1** eingesetzt werden.

Bevorzugt werden Gemische von Phenolharzen **B** eingesetzt, wobei mindestens 5 % (bevorzugt mindestens 10 %, insbesondere mindestens 25 %) dieser Phenolharze von solchen Phenolen **B1** abgeleitet sind, die in einer der ortho- und para-Stellungen zur phenolischen Hydroxylgruppe eine linearen oder verzweigten Alkylrest von 1 bis 18 Kohlenstoffatomen tragen. Besonders bevorzugt ist eine Substitution in para-Stellung. Geeignete Phenole sind beispielsweise p-n-Butylphenol, p-tert.-Butylphenol, die isomeren para-Octyl- und p-Nonylphenole und p-Octadecylphenol. Solche Phenolharze sind bevorzugt abgeleitet von Gemischen von mehreren verschieden substituierten Phenolen, wobei die alkylsubstituierten Phenole einen Massenanteil von mindestens 10 %, bevorzugt mindestens 20 %, und besonders bevorzugt mindestens 25 % in der Mischung der zu ihrer Synthese eingesetzten Phenole ausmachen.

Es wird angenommen, daß durch geeignete Substitution die Wirkung der Phenolharze in Richtung auf eine Vernetzung des Reaktionsproduktes aus ihnen und dem Harz **A** unterdrückt oder zumindest soweit vermindert werden kann, daß in jedem Fall ein lösliches Harz entsteht.

Die Verbindungen **B2** sind vorzugsweise ausgewählt aus aliphatischen linearen, verzweigten und cyclischen Aldehyden, wie Formaldehyd, Acetaldehyd und deren Homologe bzw. Isomere mit bis zu 18 C-Atomen pro Molekül, insbesondere bis zu 12 C-Atomen pro Molekül, insbesondere aber wäßriger Formaldehyd, ferner aus aliphatischen linearen, verzweigten und cyclischen Ketonen mit bis zu 18, vorzugsweise bis zu 12 C-Atomen, beispielsweise Aceton, Methyläthylketon, Diäthylketon und Kampfer. Auch die unter **A3** genannten Aldehyde können als Komponente **B2** eingesetzt werden.

Die Verbindungen der Substanzgruppe **B** sind bekannt oder können nach bekannten Verfahren der Phenolharzchemie hergestellt werden durch Umsetzung von Verbindungen **B1** mit Verbindungen **B2** vorzugsweise in Anwesenheit von Katalysatoren.

Als Katalysatoren werden für diese Umsetzung gewöhnlich starke Mineralsäuren und/oder ihre sauren Derivate, insbesondere Schwefelsäure, verwendet. Es werden dann vorzugsweise Kondensationsprodukte vom Novolak-Typ erhalten.

Es ist jedoch auch möglich die Umsetzung in Anwesenheit von basischen Metallhydroxiden, wie z. B. Natron- oder Kalilauge, oder Aminen, wie z. B. Triäthylamin, durchzuführen, wobei dann vorzugsweise die reaktiveren Kondensationsprodukte vom Resol-Typ entstehen. Diese Ausführungsform ist bevorzugt.

Die Verbindungen der Substanzklasse **B** können auch während oder nach ihrer Herstellung nach bekannten Methoden weiter modifiziert werden. Beispielsweise können im Phenol-Aldehyd-Kondensationsproduktwährend der Kondensation entstehenden Methylolgruppen mit Alkoholen **B3** veräthert werden, vorzugsweise in Gegenwart von sauren Verbindungen, wie beispielsweise Schwefelsäure. Geeignete Alkohole **B3** sind aliphatische lineare, verzweigte oder cyclische Alkohole mit 1 bis 18 Kohlenstoffatomen und aromatisch-aliphatische Alkohole mit 7 bis 14 Kohlenstoffatomen wie 2-Phenyläthanol. Beispielsweise seien genannt aliphatische Alkohole wie Butanol oder Octanol oder cyclische wie Cyclohexanol oder araliphatische wie Benzylalkohol. Durch die Art der Verätherungskomponente lassen sich beispielsweise Verträglichkeiten des Bindemittels optimieren. Auch kann durch die Verätherung eine möglicherweise zu hohe Reaktivität des Phenol-Aldehyd-Kondensationsprodukt vorteilhaft erniedrigt werden, was ein ganz besonderer Vorteil ist.

Es ist jedoch auch möglich, die in den Kondensationsprodukten vorhandenen Methylolgruppen mit aliphatischen oder aromatischen Carbonsäuren **B4**, wie z. B. Fettsäuren, beispielsweise Tallölfettsäure oder Kokosfettsäure, oder Benzoesäure zu verestern.

Ferner können die Phenol-Aldehyd-Kondensationsprodukte mit vegetabilischen Ölen **B5**, wie z. B. Holzöl oder Rizinusöl, oder Polyestern **B6** plastifiziert werden. Es ist jedoch auch möglich, Phenole zuerst mit langkettigen ungesättigten Fettsäuren **B7**, wie Leinölfettsäure, Ricinolsäure, Ölsäure, Tallölfettsäuren zu Umsetzungsprodukten **B17** umzusetzen und diese anschließend mit Aldehyden zu kondensieren.

Die Verbindungen der Substanzgruppe **B** können auch in gelöster Form vorliegen. Zweckmäßigerweise werden die Lösungsmittel verwendet, in denen auch die erfindungsgemäße Umsetzung stattfindet.

Die Verbindungen der Substanzklasse **B** können einzeln, zu mehreren nacheinander oder als Gemische in die erfindungsgemäße Umsetzung eingesetzt werden.

Als Lösungsmittel **C** kommen als solche in Betracht, wie sie vorzugsweise auch bei der Herstellung von Bindemitteln und Druckfarben verwendet werden, beispielsweise (alkylierte) Aromaten **C1** wie Toluol oder Xylol, naphthenische oder aromatische Kohlenwasserstoffe oder deren Gemische, Aliphaten **C2** wie Hexan oder Heptan, Cycloaliphaten wie Cyclohexan oder Cyclopentan, Benzinfraktionen, Mineralöle wie beispielsweise paraffinische Kohlenwasserstoffe, Gemische aus paraffinischen und naphthenischen Kohlenwasserstoffen oder Gemische aus paraffinischen, naphthenischen und aromatischen Kohlenwasserstoffen überwiegend im $C_{13}$- bis $C_{20}$-Bereich, pflanzliche und tierische Öle und Fette oder von diesen abgeleitete Verbindungen **C3** wie beispielsweise Leinöl, Sojaöl, Kokosfett oder hydriertes Kokosfett, Rapsöl, Rindertalg, Veresterungsprodukte von Fettsäuren und hydrierten Fettsäuren wie Kokosfettsäureäthylester oder Rapsölmethylester, ferner Ketone **C4** wie Methyläthylketon, Cyclohexanon, Alkohole **C5** wie Äthanol oder Tridecylalkohol, Äther **C6** wie Methoxypropanol, Ester **C7** wie Essigsäureäthyl- oder -butylester. Auch Gemische dieser Komponenten untereinander oder aus verschiedenen Gruppen **C1** bis **C7** können eingesetzt werden.

Vorzugsweise werden Lösungsmittel oder Gemische von Lösungsmitteln eingesetzt, die Toluol oder Mineralöl enthalten.

Die Lösungsmittel **C** können einzeln, zu mehreren nacheinander oder als Gemische bei der erfindungsgemäßen Umsetzung eingesetzt werden.

Der Massenanteil der einzelnen Komponenten **A**, **B** und **C**, bezogen auf die Gesamtmasse der eingesetzten Verbindungen und gegebenenfalls weiterer zur Bindemittelherstellung benötigten Zuschlagstoffe beträgt bei der Herstellung der erfindungsgemäßen Bindemittel

1 bis 98, vorzugsweise 10 bis 90, insbesondere 20 bis 80 % modifizierte Naturharze und/oder Kohlenwasserstoffharze aus der Substanzgruppe **A**,
0,1 bis 50, vorzugsweise 1 bis 20, insbesondere 2 bis 10 %, Phenol-Aldehyd-Kondensationsprodukte aus der Substanzgruppe **B**,
1 bis 98, vorzugsweise 20 bis 80, insbesondere 30 bis 70 % Lösungsmittel aus der Substanzgruppe **C**, wobei die Summe der Massenanteile aller im Bindemittel enthaltenen Komponenten 100 % beträgt.

Die Erfindung umfaßt auch Verfahren zur Herstellung der erfindungsgemäßen modifizierten Bindemittel durch gemeinsames Erhitzen von Verbindungen der Substanzklassen **A**, **B** und **C** im Temperaturbereich von 50 bis 300 °C.

Zur Herstellung werden die in der Bindemittelchemie üblichen Apparaturen verwendet. Sie bestehen üblicherweise aus einem Stahlkessel, der mit Wärmeträgeröl beheizt werden kann, und mit einer Dosiervorrichtung sowie einem Rührwerk ausgerüstet ist. Es ist ein besonderer Vorteil der vorliegenden Erfindung, daß zur Durchführung des erfindungsgemäßen Verfahrens übliche Rührkessel benutzt werden können. Es ist nicht erforderlich, spezielle Aggregate zur Handhabung hochviskoser Systeme wie spezielle Dünnschichtreaktoren, Scheiben-Reaktoren oder Ein- oder Mehrwellen-Kneter (Extruder, List-Reaktoren u. ä.) einzusetzen.

Zweckmäßigerweise werden die Verbindungen der Substanzklassen **A** und **B** im Lösungsmittel **C** vorgelegt und dann auf die gewünschte Reaktionstemperatur gebracht. Es ist jedoch auch möglich, z. B. die Verbindungen der Substanzklasse **A** im Lösungsmittel **C** vorzulegen, die Lösung auf die gewünschte Temperatur zu bringen und dann die Verbindung(en) der Substanzklasse **B**, vorzugsweise gelöst in einem Lösungsmittel gemäß **C** zuzudosieren, das gleich oder verschieden sein kann von dem für **A** verwendeten. Der Fortgang der Reaktion kann zweckmäßigerweise durch die Bestimmung der Viskositätswerte ermittelt und dann beim gewünschten Stadium durch Abkühlen abgebrochen werden.

Die Reaktion verläuft im Temperaturbereich von vorzugsweise 150 bis 250 °C im allgemeinen rasch und gut kontrollierbar. Sie ist dann nach ca. 1 bis 3 h beendet.

Die erfindungsgemäßen Bindemittel fallen zunächst als viskose Flüssigkeiten an, die beispielsweise über ihre rheologischen Eigenschaften charakterisiert werden können. Als Charakteristika können in üblicher Weise Fließkurven, Viskositäten bei vorgegebenem Schergefälle oder viskoelastischen Eigenschaften bestimmt werden. Zur Messung können übliche Rotationsviskosimeter herangezogen werden.

Die erfindungsgemäßen Bindemittel können auch durch Zugabe von weiteren Lösungsmitteln wie Toluol oder auch Benzin- oder Mineralölfraktionen, Wachsen, weiteren Bindemittelbestandteilen wie Kolophonium, Kolophoniumester, Alkydharzen, modifizierten Natur- oder Kohlenwasserstoffharzen, Dispergierhilfsmitteln wie Lecithinen, Sikkativen und zusätzlichen Additiven, wie sie üblicherweise zur Herstellung von Bindemitteln verwendet werden, weiter modifiziert werden. Auch können durch diese Zusätze die Viskositäten der erhaltenen Bindemittel optimiert werden.

Es ist möglich, solche Bindemittelbestandteile während oder vor der erfindungsgemäßen Umsetzung zuzugeben.

Die molare Masse der erfindungsgemäßen Bindemittel kann durch Gelpermeationschromatographie der Harzlösungen in Tetrahydrofuran (THF) an Polystyrolgel in einem Permeationsmeßgerät nach bekannten Methoden ermittelt werden. Die mit dieser Methode bestimmte gewichtsmittlere molare Masse $M_w$ der erfindungsgemäßen Bindemittel liegt gemäß den erhaltenen Meßergebnissen vorzugsweise bei Werten von $M_w > 500$ g/mol und ist nach oben nicht kritisch begrenzt, bevorzugt jedoch unter 500 000 g/mol. Besonders bevorzugt liegt $M_w$ jedoch in einem Bereich von über 2 000 g/mol. Die durch diese Messung bestimmte Uneinheitlichkeit $U$ liegt üblicherweise zwischen 2 und 25, bevorzugt zwischen 3 und 20.

Es ist ein ganz außerordentlicher Vorteil des erfindungsgemäßen Verfahrens, derart hohe molare Massen oder Polymerisationsgrade (molare Masse des Polymeren dividiert durch die mittlere molare Masse seiner Monomer-Bausteine, oder mittlere Anzahl von Monomer-Bausteinen in einem Polymer-Molekül) problemlos einstellen zu können, da die herkömmliche Methode, hochmolekulare Harze erst als Festharz herzustellen und dann durch Auflösen das Bindemittel zu bereiten, wegen der hohen Schmelzeviskositäten und der Gelierneigung bei der Festharzherstellung schwierig oder gar unmöglich sein kann. Bindemittel, die über diese "Festharz-Route" hergestellt werden, enthalten stets vergelte Partikel mit vernetzten Anteilen, die beim Lösen des Bindemittels in dem verwendeten Lösungsmittel ("Vehikel") nicht vollständig löslich sind und nur an- oder aufquellen. Solche angequollenen Teilchen stören bei der Herstellung der Druckfarbe und müssen daher durch besondere Maßnahmen, z. B. Filtration der Bindemittel-Lösung, entfernt werden. Die Gelteilchen verstopfen die verwendeten Filter rasch; daher ist dieser zusätzliche Verfahrensschritt sehr aufwendig.

Die erfindungsgemäßen Bindemittel sind weitgehend oder vollständig frei von vergelten Partikeln und können daher ohne Filtrationsschritt zur Herstellung der Druckfarben eingesetzt werden. Dies ist ein außerordentlicher wirtschaftlicher Vorteil.

In einer bevorzugten Ausführung des erfindungsgemäßen Verfahrens wird als Lösungsmittel der Substanzgruppe **C** Toluol und die erhaltenen erfindungsgemäßen Bindemittel in Farben für den Illustrationstiefdruck mit Toluol verwendet.

Die erfindungsgemäßen Bindemittel können dann direkt mit Pigment mit Hilfe eines Dispergieraggregats nach den üblichen Methoden zur Druckfarbe pigmentiert oder auch als sogenannte Auflack- oder Verschnittfirnisse zu Pigmentanreibungen zugegeben werden.

Die erfindungsgemäßen Bindemittel besitzen ein ausgezeichnetes Benetzungsverhalten für die im Illustrationstiefdruck verwendeten Buntpigmente Gelb, Rot und Blau sowie für die üblichen Schwarzpigmente.

Die erfindungsgemäßen Bindemittel weisen darüber hinaus trotz ihrem hohen Polymerisationsgrad eine ausgezeichnete Verträglichkeit mit anderen Bindemitteln, beispielsweise mit toluolischen Lösungen von modifizierten Naturharzsäureestern, Resinaten, Kohlenwasserstoffharzen, Äthylhydroxyäthylcellulosen (EHEC) oder Chlorkautschuk auf, wodurch sie breit einsetzbar sind.

Weiterer Gegenstand der Erfindung ist daher die Verwendung der erfindungsgemäßen Bindemittel als Bindemittel in Farben für den Illustrationstiefdruck mit Toluol.

In einer weiteren und besonders bevorzugten Ausführungsform der Erfindung werden als Lösungsmittel der Substanzgruppe **C** Mineralöle verwendet wie beispielsweise paraffinische, naphthenische oder aromatische Kohlenwasserstoffe oder deren Gemische, wie beispielsweise Gemische aus paraffinischen und naphthenischen Kohlenwasserstoffen oder Gemische aus paraffinischen, naphthenischen und aromatischen Kohlenwasserstoffen überwiegend im $C_{13}$- bis $C_{20}$-Bereich. Die erhaltenen erfindungsgemäßen Bindemittel werden dann vorzugsweise in Farben für den Offset- und Buchdruck verwendet.

Die erfindungsgemäßen Bindemittel können gegebenenfalls mit weiteren Bindemittelharzen, wie z.B. Phenolharz-modifizierten Kolophoniumharzen, vegetabilischen Ölen, weiteren Zuschlagstoffen wie beispielsweise Wachsen, Füllstoffen, wie beispielsweise feinteiligem Siliciumdioxid, Trocknungshilfsmittel, wie beispielsweise Mangannaphthenat, Alkydharzen zur Verbesserung der Scheuerfestigkeit, langkettigen Alkoholen oder Estern zur Verträglichkeitsoptimierung, wie beispielsweise Isotridecylalkohol oder 2,2,4-Trimethyl-1,3-pentandiol-diisobutyrat, vermischt und daraus durch Pigmentierung mit den Buntpigmenten Gelb, Rot und Blau und Schwarzpigmenten oder durch Zusatz von Pigmentanreibungen die für den Offset- und Buchdruck verwendbaren Druckfarben erhalten werden.

Weiterer Gegenstand der Erfindung ist daher die Verwendung der erfindungsgemäßen Bindemittel in Druckfarben für den Offsetdruck und den Buchdruck, wo sie ganz besonders vorteilhaft einsetzbar sind.

Zur Optimierung des Farbübertragungsverhaltens von Offsetdruckfarben ist es vorteilhaft, die den Farben zugrunde liegenden Bindemittel unter Verwendung von Gelbildnern in sogenannte Gelfirnisse zu überführen. Durch die Gelstruktur kann erreicht werden, daß die Rasterpunkte vorteilhaft scharf aufgedruckt werden und beim Wegschlagen des Mineralöls kein Auslaufen und damit kein Verschwimmen des Druckbilds stattfindet. Hier sind die erfindungsgemäßen Bindemittel insbesondere den nach konventionellen Methoden durch Reaktion von Bindemittelharzen mit Aluminium verbindungen, wie z.B. Aluminiumalkoholat (abgeleitet von z. B. von Methanol, Äthanol, Isopropanol oder tert.-Butanol) oder mit Acetessigester stabilisiertem Aluminiumalkoholat, in hochsiedendem Mineralöl hergestellten Gelfirnissen überlegen. Sie zeigen eine erwünschte stärkere Elastizität, eine verbesserte Temperaturbeständigkeit der viskoelastischen Eigenschaften und eine verbesserte Scherstabilität, was insbesondere bei hohen Laufgeschwindigkeiten der Druckmaschinen ein außerordentlicher Vorteil ist.

Die Gelstruktur der erfindungsgemäßen Bindemittel kann durch rheologische Messungen charakterisiert werden. Als Charakterisierungsmethode ist hierbei vorzugsweise die Bestimmung der Viskoelastizität geeignet, die unter Verwendung eines oszillierenden Rotationsviskosimeters erfolgen kann, wobei der elastische Anteil (= Speichermodul G') und der viskose Anteil (= Verlustmodul G") ermittelt werden. In der Literatur wird der Quotient G"/G' häufig als tan δ bezeichnet. Hohe Werte (über 5) stehen dabei für schwache Gelstrukturen, niedrige Werte für starke Gelstrukturen. Der tan δ ist somit ein einfach bestimmbares Maß für ein charakteristisches Eigenschaftsmerkmal und kann im vorliegenden Fall vorteilhaft zur Charakterisierung der erfindungsgemäßen Bindemittel herangezogen werden.

Vorzugsweise werden durch das beschriebene Verfahren Bindemittel hergestellt, deren Viskoelastizität durch einen tan δ - Wert charakterisiert ist, der vorzugsweise zwischen 1 und 30, insbesondere zwischen 1,1 und 20 liegt, ermittelt mit dem Gerät RS 100 der Fa. Haake und der Meßeinrichtung C 20/1° bei einer Winkelgeschwindigkeit (Schergefälle) $\dot{\gamma}$ zwischen 1 und 10 s$^{-1}$. Ganz besonders sind jedoch erfindungsgemäße Bindemittel bevorzugt, die durch Werte von tan δ zwischen 1,2 und 5 charakterisiert sind.

Natürlich können die erfindungsgemäßen Bindemittel, falls es erwünscht ist, zusätzlich mit Aluminiumverbindungen umgesetzt werden.

Durch Variation insbesondere der Verbindungen der Substanzklasse **B** können Verträglichkeit, Viskosität und Elastizität des erfindungsgemäßen Bindemittels maßgeschneidert eingestellt und an die Erfordernisse angepaßt werden. Es haben sich insbesondere Produkte auf Basis von t-Butyl- und Nonylphenol sowie Kresol und Bisphenol A bewährt.

Diese Möglichkeit zur gezielten Beeinflussung dieser Eigenschaften durch Variation der phenolischen Komponente in **B** war nicht vorhersehbar und ist als außerordentlich vorteilhaft zu betrachten.

Die breite Einsetzbarkeit der neuen Verbindungen für derart unterschiedliche Druckverfahren, wie Offset-, Buch- und Tiefdruck, bedeutet einen ganz besonders wichtigen Vorteil und eine außerordentliche Verbesserung gegenüber den Harzen des Standes der Technik.

Die Erfindung wird durch die nachfolgenden Beispiele näher erläutert, ohne sie jedoch einzuschränken.

In den nachfolgenden Beispielen bedeuten ebenso wie im vorhergehenden Text alle Angaben mit der Einheit "%" Massenanteile, soweit nicht anders angegeben. "Teile" sind stets Massenteile. Konzentrationsangaben in "%" sind Massenanteile des gelösten Stoffes in der Lösung.

Die in den Beispielen verwendeten modifizierten Naturharze und/oder Kohlenwasserstoffharze sowie die Phenol-Aldehyd-Kondensationsprodukte sind bekannt oder können nach bekannten Methoden hergestellt werden.

## Beispiele

### Vergleichsbeispiel 1

In einem beheizbaren 2 l-Mehrhalskolben mit Rührwerk und Temperaturmessung wurden 400 g eines Kohlenwasserstoffharzes mit $C_5$-Einheiten (hergestellt nach EP 0 580 954 B 1) und 600 g eines hochsiedenden Mineralöls (Test Oil 6/9, Fa. Haltermann) 3 h unter Rühren auf 180 °C erhitzt. Dann ließ man abkühlen. Das resultierende Bindemittel mit einem Harzanteil von 40 % besaß eine Viskosität von 680 dPa•s (gemessen bei 20 °C und einem Schergefälle von 10 s$^{-1}$). Die durch Gelpermeationschromatographie ermittelte gewichtsmittlere molare Masse $M_w$ betrug 20 872 g/mol.

### Beispiel 1

In einem beheizbaren 2 l-Mehrhalskolben mit Rührwerk und Temperaturmessung wurden 380 g des Kohlenwasserstoffharzes des Vergleichsbeispiels 1, 20 g eines bei Raumtemperatur festen t-Butylphenol-Formaldehyd-Kondensationsprodukts (hergestellt analog zu dem in Wagner-Sarx, Lackkunstharze, Carl Hanser Verlag, München 1959, S. 28 bis 49, angegebenen Verfahren, Erweichungspunkt 63 °C) und 600 g des hochsiedenden Mineralöls des Vergleichsbeispiels 1 3 h unter Rühren auf 180 °C erhitzt. Dann ließ man abkühlen. Das resultierende Bindemittel mit einem Harzanteil von 40 % besaß eine Viskosität von 3016 dPa•s (gemessen bei 20 °C und einem Schergefälle von 10 s$^{-1}$). Die durch Gelpermeationschromatographie ermittelte gewichtsmittlere molare Masse $M_w$ betrug 44 612 g/mol.

### Beispiel 2

In einem beheizbaren 2 l-Mehrhalskolben mit Rührwerk und Temperaturmessung wurden 360 g des Kohlenwasserstoffharzes des Vergleichsbeispiels 1, 40 g des bei Raumtemperatur festen und mit Butanol verätherten t-Butylphenol-Formaldehyd-Kondensationsprodukts des Vergleichsbeispiels 1 (hergestellt analog zu den in Wagner-Sarx, Lackkunstharze, Carl Hanser Verlag, München 1959, S. 49, angegebenen Verfahren, Erweichungspunkt 44 °C) und 600 g des hochsiedenden Mineralöls des Vergleichsbeispiels 1 3 h unter Rühren auf 180 °C erhitzt. Dann ließ man abkühlen. Das resultierende Bindemittel mit einem Harzanteil von 40 % besaß eine Viskosität von 11110 dPa•s (gemessen bei 20 °C und einem Schergefälle von 10 s$^{-1}$). Die durch Gelpermeationschromatographie ermittelte gewichtsmittlere molare Masse $M_w$ betrug 149 618 g/mol.

### Vergleichsbeispiel 2

In einem beheizbaren 2 l-Mehrhalskolben mit Rührwerk und Temperaturmessung wurden 360 g des Kohlenwasserstoffharzes des Vergleichsbeispiels 1 geschmolzen. Die Schmelze begann bei ca. 220 °C rührfähig zu werden. Dann fügte man 40 g des verätherten t-Butylphenol-Formaldehyd-Kondensationsprodukts des Beispiels 2 unter Rühren zu. Die Schmelze gelierte innerhalb 2 min unter Bildung eines Produkts, das im oben verwendeten Mineralöl unlöslich war.

### Beispiel 3

In einem beheizbaren 2 l-Mehrhalskolben mit Rührwerk und Temperaturmessung wurden 360 g des Kohlenwasserstoffharzes des Vergleichsbeispiels 1, 40 g eines bei Raumtemperatur flüssigen und mit Butanol verätherten Nonylphenol-Formaldehyd-Kondensationsprodukts (hergestellt analog zu den in Wagner-Sarx, Lackkunstharze, Carl Hanser Verlag, München 1959, S. 28 bis 49, angegebenen Verfahren) und 600 g des hochsiedenden Mineralöls des Vergleichsbeispiels 1 3 h unter Rühren auf 180 °C erhitzt. Dann ließ man abkühlen. Das resultierende Bindemittel mit einem Harzanteil von 40 % besaß eine Viskosität von 1205 dPa•s (gemessen bei 20 °C und einem Schergefälle von 10 s$^{-1}$). Die durch Gelpermeations-

chromatographie ermittelte gewichtsmittlere molare Masse $M_w$ betrug 94 359 g/mol.

### Beispiel 4

In einem beheizbaren 2 l-Mehrhalskolben mit Rührwerk und Temperaturmessung wurden 360 g eines Naturharzsäureesters, der mit einem Kohlenwasserstoffharz auf $C_5$-Basis und mit Phenolharz modifiziert war (hergestellt nach EP 0 548 506 B1 und charakterisiert durch eine Viskosität einer Lösung von 40 Teilen Harz in 30 Teilen hochsiedendem Mineralöl Test Oil 6/9 und 30 Teilen Leinöl von 440 dPa•s bei 20 °C und einem Schergefälle von 50 s$^{-1}$ sowie durch einen tan δ von 8,7), 40 g des verätherten t-Butylphenol-Formaldehyd-Kondensationsprodukts des Beispiels 2, 300 g des hochsiedenden Mineralöls des Vergleichsbeispiels 1 und 300 g Leinöl 3 h unter Rühren auf 180 °C erhitzt. Dann ließ man abkühlen. Das resultierende Bindemittel mit einem Harzanteil von 40 % besaß bei 20 °C eine Viskosität von 7963 dPa•s (gemessen bei einem Schergefälle von 10 s$^{-1}$) und ließ sich durch einen tan δ von 1,48 charakterisieren.

### Beispiel 5

In einem beheizbaren 2 l-Mehrhalskolben mit Rührwerk und Temperaturmessung wurden 360 g des mit einem Kohlenwasserstoffharz modifizierten Naturharz-säureesters des Beispiels 4, 40 g des verätherten Nonylphenol-Formaldehyd-Kondensationsprodukts des Beispiels 3, 300 g des hochsiedenden Mineralöls des Vergleichsbeispiels 1 und 300 g Leinöl 3 h unter Rühren auf 180 °C erhitzt. Dann ließ man abkühlen. Das resultierende Bindemittel mit einem Harzanteil von 40 % besaß bei 20 °C eine Viskosität von 2145 dPa•s (gemessen bei einem Schergefälle von 10 s$^{-1}$) und ließ sich durch einen tan δ von 2,71 charakterisieren.

### Beispiel 6

In einem beheizbaren 2 l-Mehrhalskolben mit Rührwerk und Temperaturmessung wurden 360 g des mit einem Kohlenwasserstoffharz modifizierten Naturharz-säureesters des Beispiels 4, 40 g eines bei Raumtemperatur flüssigen und mit Butanol verätherten Nonylphenol-Bisphenol-Formaldehyd-Kondensationsprodukts (hergestellt analog zu den in Wagner-Sarx, Lackkunstharze, Carl Hanser Verlag, München 1959, S. 28 bis 49, angegebenen Verfahren mit einem Massenverhältnis von Nonylphenol zu Bisphenol von 95 : 5), 300 g des hochsiedenden Mineralöls des Vergleichsbeispiels 1 und 300 g Leinöl 3 h unter Rühren auf 180 °C erhitzt. Dann ließ man abkühlen. Das resultierende Bindemittel mit einem Harzanteil von 40 % besaß bei 20 °C eine Viskosität von 5193 dPa•s (gemessen bei einem Schergefälle von 10 s$^{-1}$) und ließ sich durch einen tan δ

von 1,82 charakterisieren.

### Beispiel 7

In einem beheizbaren 2 l-Mehrhalskolben mit Rührwerk und Temperaturmessung wurden 380 g des mit einem Kohlenwasserstoffharz modifizierten Naturharz-säureesters des Beispiels 4, 20 g eines bei Raumtemperatur festen und mit Butanol verätherten Nonylphenol-Kresol-Formaldehyd-Kondensationsprodukts (hergestellt analog zu den in Wagner-Sarx, Lackkunstharze, Carl Hanser Verlag, München 1959, S. 28 bis 49, angegebenen Verfahren mit einem Massenverhältnis von Nonylphenol zu Kresol von 75 : 25 und einem Erweichungspunkt von 64 °C), 300 g des hochsiedenden Mineralöls des Vergleichsbeispiels 1 und 300 g Leinöl 3 h unter Rühren auf 180 °C erhitzt. Dann ließ man abkühlen. Das resultierende Bindemittel mit einem Harzanteil von 40 % besaß bei 20 °C eine Viskosität von 5401 dPa•s (gemessen bei einem Schergefälle von 10 s$^{-1}$) und ließ sich durch einen tan δ von 1,95 charakterisieren.

### Beispiel 8

In einem beheizbaren 2 l-Mehrhalskolben mit Rührwerk und Temperaturmessung wurden 360 g eines mit Phenolharz modifizierten Kolophoniumharzes (hergestellt nach der europäischen Patentanmeldung EP-A 0 615 986 und charakterisiert durch eine Viskosität einer Lösung von 40 Teilen Harz in 60 Teilen hochsiedendem Mineralöl Test Oil 6/9 von 440 dPa•s und einem tan δ von 11,5) und 560 g des hochsiedenden Mineralöls des Vergleichsbeispiels 1 auf 180 °C erhitzt. Nachdem sich das Harz vollständig aufgelöst hatte, wurden 40 g des Nonylphenoll-Kresol-Formaldehyd-Kondensationsprodukts des Beispiels 7, das in 40 g des hochsiedenden Mineralöls aufgelöst worden war (Viskosität 265 mPa•s) innerhalb 20 min zugetropft. Dann ließ man 1 h nachreagieren und kühlte ab. Das resultierende Bindemittel mit einem Harzanteil von 40 % besaß eine Viskosität von 1267 dPa•s (gemessen bei 20 °C und einem Schergefälle von 10s$^{-1}$) und ließ sich durch einen tan δ von 2,47 charakterisieren.

### Beispiel 9

100 g einer Pigmentpaste, die nach den üblichen Methoden durch Dispergieren von 32 Teilen Rotpigment ®Litholrubin L6B (Fa. BASF AG) in einem Firnis, bestehend aus 32 Teilen ®Albertol VKP 1385 (Fa. Vianova Resins), 9 Teilen ®Vialkyd AL 636 (Fa. Vianova Resins), 12 Teilen Leinöl und 23 Teilen Mineralöl PKWF 28/31 hergestellt wurde, wurde mit 75 g des Firnisses aus Beispiel 6, 22 g Mineralöl PKWF 28/31 (Fa. Haltermann), 2 g 2,2,4-Trimethyl-1,3-pentandiol-diisobutyrat und 1g Mangannaphthenat versetzt und die Mischung auf der Tellerreibmaschine dispergiert.

Die resultierende Druckfarbe für den Offsetdruck wurde auf dem Probedruckgerät der Fa. Prüfbau auf Kunstdruckpapier APCO II/II angedruckt. Es wurden hochglänzende Andrucke mit sehr guter Trocknung und gutem Scheuerverhalten erhalten.

**Patentansprüche**

1. Bindemittel für Druckfarben, erhältlich durch Umsetzung von

   Verbindungen **A** enthaltend Einheiten von Naturharzen und/oder Naturharzsäuren und/oder Kohlenwasserstoffharzen mit $C_5$-, $C_9$- oder Terpen-Einheiten mit

   Verbindungen **B** enthaltend Einheiten von Phenol-Aldehyd-Kondensationsprodukten

   in einem Lösungsmittel **C** bei einer Temperatur von 50 bis 300 °C, wobei der Massenanteil der Verbindungen **A** 1 bis 98 %, der der Verbindungen **B** 0,1 bis 50 %, und der der Lösungsmittel **C** in der Reaktionsmischung 1 bis 98 % beträgt, und die Summe der Massenanteile stets 100 % beträgt, und wobei die entstehenden Harzlösungen nicht vernetzt sind.

2. Bindemittel für Druckfarben nach Anspruch 1, dadurch gekennzeichnet, daß die Verbindungen **A** erhältlich sind durch Umsetzung von

   **A1** Harzen ausgewählt aus Kolophonium, Wurzelharz, Tallharz sowie disproportioniertem oder partiell hydriertem oder dimerisiertem Naturharz und Kohlenwasserstoffharzen mit $C_5$-, $C_9$- oder Terpen-Einheiten mit mindestens einer Verbindung aus mindestens einer der Gruppen

   **A2** einkernige und mehrkernige Phenole, die gegenüber Oxoverbindungen mehrfachfunktionell sind,

   **A3** Aldehyde oder Aldehydacetale,

   **A4** Metallverbindungen ein-, zwei- und dreiwertiger Metalle,

   **A5** $\alpha,\beta$-äthylenisch ungesättigte Carbonsäuren oder deren Anhydride,

   **A6** mindestens zwei Hydroxylgruppen enthaltende Veresterungsmittel, und

   **A7** Fettsäuren mit 10 bis 26 C-Atomen oder deren Dimere und Trimere.

3. Bindemittel für Druckfarben nach Anspruch 2, dadurch gekennzeichnet, daß die Verbindungen der Klassen **A2** und **A3** teilweise oder gänzlich ersetzt sind durch Phenol-Aldehyd-Kondensationsprodukte **A23**, herstellbar durch separate Umsetzung von Verbindungen gemäß **A2** und Verbindungen gemäß **A3**.

4. Bindemittel für Druckfarben nach Anspruch 1, dadurch gekennzeichnet, daß die Verbindungen **B** erhältlich sind durch Umsetzung von phenolischen Verbindungen **B1**, die mindestens ein gegenüber Aldehyden reaktives Wasserstoffatom am aromatischen Kern besitzen, mit Oxoverbindungen **B2**, ausgewählt aus Aldehyden, Ketonen und Verbindungen, die unter Bildung von Aldehyd- oder Ketongruppen unter den Bedingungen dieser Umsetzung reagieren können.

5. Bindemittel für Druckfarben nach Anspruch 4, dadurch gekennzeichnet, daß die Verbindungen **B1** ausgewählt sind aus Monoalkylphenolen, deren Alkylrest linear oder verzweigt ist und 3 bis 10 Kohlenstoffatome aufweist.

6. Bindemittel für Druckfarben nach Anspruch 4, dadurch gekennzeichnet, daß als Oxoverbindung **B2** Formaldehyd eingesetzt wird.

7. Bindemittel für Druckfarben nach Anspruch 4, dadurch gekennzeichnet, daß die Umsetzungsprodukte **B** vor der Reaktion mit Verbindungen **A** mit Alkoholen **B3** veräthert werden, ausgewählt aus linearen, verzweigten oder cyclischen aliphatischen Alkoholen mit 1 bis 18 Kohlenstoffatomen.

8. Bindemittel für Druckfarben nach Anspruch 4, dadurch gekennzeichnet, daß die Umsetzungsprodukte **B** vor der Reaktion mit den Verbindungen **A** mit linearen, verzweigten oder cyclischen aliphatischen oder aromatischen Monocarbonsäuren **B4** verestert werden.

9. Verfahren zur Herstellung von Bindemitteln für Druckfarben, dadurch gekennzeichnet, daß

   Verbindungen **A** enthaltend Einheiten von Naturharzen und/oder Naturharzsäuren und/oder Kohlenwasserstoffharzen mit $C_5$-, $C_9$- oder Terpen-Einheiten mit

   Verbindungen **B** enthaltend Einheiten von Phenol-Aldehyd-Kondensationsprodukten

   in einem Lösungsmittel **C** bei einer Temperatur von 50 bis 300 °C derart umgesetzt werden, daß keine Vernetzung auftritt.

**10.** Verfahren nach Anspruch 9, dadurch gekennzeichnet, daß die Lösungsmittel **C** ausgewählt werden aus alkylsubstituierten aromatischen Kohlenwasserstoffen **C1** mit 6 bis 15 Kohlenstoffatomen, linearen, verzweigten oder cyclischen aliphatischen Kohlenwasserstoffen **C2** mit 5 bis 40 Kohlenstoffatomen, pflanzlichen und tierischen Ölen **C3**, linearen, verzweigten und cyclischen aliphatischen sowie gemischt aliphatisch-aromatischen Ketonen **C4**, linearen, verzweigten und cyclischen aliphatischen Alkoholen **C5** mit 1 bis 15 Kohlenstoffatomen sowie linearen, verzweigten und cyclischen aliphatischen Äthern **C6** und Estern **C7** mit jeweils 1 bis 18 Kohlenstoffatomen in der Alkylgruppe.